# EUROPEAN PATENT APPLICATION

(11) **EP 4 786 240 A1**
(43) Date of publication of application: **05.08.2026**
(21) Application number: 25226815.6
(22) Date of filing: 23.12.2025
(51) Int. Cl.: B60K 35/10, B60K 35/22, B60K 35/60, B60K 35/81

(54) **IN-VEHICLE SYSTEM AND INFORMATION PROCESSING APPARATUS**

(30) Priority: 09.01.2025 JP 2025003780
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system includes a first display device including a first display unit provided in front of a driver's seat in a vehicle interior, a second display device including a second display unit provided closer to a passenger's seat than the first display unit in a front portion of the vehicle interior, and an information processing apparatus. In a case where the first display device accepts a luminance adjustment command of the first display unit, the information processing apparatus also adjusts luminance of the second display unit of the second display device in coordination with luminance adjustment of the first display unit.

## Description

### BACKGROUND

### Technical Field

The present disclosure relates to an in-vehicle system and an information processing apparatus.

### Description of the Related Art

A vehicle is known, which includes a steering wheel, a center display unit provided in front of the steering wheel, and a side display unit provided on one side or both sides of the center display unit in a vehicle width direction (see, for example, Patent Literature 1).

Further, electronic equipment or a computer including a plurality of display units or displays is known (see, for example, Patent Literatures 2-4). The electronic equipment disclosed in Patent Literature 2 includes a first luminance adjustment unit and a second luminance adjustment unit. The first luminance adjustment unit performs luminance adjustment of a first display unit and luminance adjustment of a second display unit in coordination with each other in accordance with first operation. The second luminance adjustment unit performs only luminance adjustment of the second display unit in accordance with second operation.

The multi-monitor system disclosed in Patent Literature 3 calculates, based on luminance information values of a specific display device and the other display devices and a luminance setting value of the specific display device freely set by a user, luminance setting values of the other display devices such that luminance of the other display devices becomes substantially the same as luminance of the specific display device. The computer disclosed in Patent Literature 4 changes luminance of a primary display and luminance of a secondary display at the same time.

### Citation List

### Patent Literature

Patent Literature 1: Japanese Patent No. 7306210
Patent Literature 2: Japanese Patent Laid-Open No. 2021-51268
Patent Literature 3: Japanese Patent Laid-Open No. 2015-1585
Patent Literature 4: Japanese Patent Laid-Open No. 2010-117569

### SUMMARY

An object of the present disclosure is to improve convenience of luminance adjustment of a plurality of display units provided in a front portion of a vehicle interior.

An in-vehicle system according to a first aspect of the present disclosure may be an in-vehicle system including a first display device including a first display unit provided in front of a driver's seat in a vehicle interior, a second display device including a second display unit provided closer to a passenger's seat than the first display unit in a front portion of the vehicle interior, and an information processing apparatus that controls the first display device and the second display device,
each of the first display unit and the second display unit may include a touch panel, and
the information processing apparatus may include a controller configured to execute:
   in a case where a signal that gives a command to adjust luminance of the first display unit is received from the touch panel of the first display unit, also adjusting luminance of the second display unit in the same adjustment direction, at the same timing, and at the same rate as an adjustment direction, a timing, and a rate of luminance adjustment of the first display unit by transmitting a control signal for executing luminance control to the first display device and the second display device.

An in-vehicle system according to a second aspect of the present disclosure may be an in-vehicle system including a first display device including a first display unit provided in front of a driver's seat in a vehicle interior, a second display device including a second display unit provided closer to a passenger's seat than the first display unit in a front portion of the vehicle interior, and an information processing apparatus that controls the first display device and the second display device, and
the information processing apparatus may include a controller configured to execute:
in a case where the first display device accepts a luminance adjustment command of the first display unit, also adjusting luminance of the second display unit of the second display device in coordination with luminance adjustment of the first display unit.

An information processing apparatus according to a third aspect of the present disclosure may be an information processing apparatus controlling a first display device including a first display unit provided in front of a driver's seat in a vehicle interior, and a second display device including a second display unit provided closer to a passenger's seat than the first display unit in a front portion of the vehicle interior, and
the information processing apparatus may include a controller configured to execute:
in a case where the first display device accepts a luminance adjustment command of the first display unit, also adjusting luminance of the second display unit of the second display device in coordination with luminance adjustment of the first display unit.

According to the present disclosure, it is possible to improve convenience of luminance adjustment of a plurality of display units provided in a front portion of a vehicle interior.

### BRIEF DESCRIPTION OF THE DRAWINGS

Fig. 1 is a view illustrating an aspect of a front portion of a vehicle interior of a vehicle according to an embodiment;
Fig. 2 is a view illustrating a schematic configuration of a first display device and its circumference;
Fig. 3 is a block diagram schematically illustrating an example of a hardware configuration of a system mounted on the vehicle;
Fig. 4 is a block diagram schematically illustrating an example of a functional configuration of an ECU;
Fig. 5 is a flowchart indicating flow of first luminance adjustment control according to a first embodiment;
Fig. 6 is a flowchart indicating flow of second luminance adjustment control according to the first embodiment;
Fig. 7 is a flowchart indicating flow of first luminance adjustment control according to a modification of the first embodiment;
Fig. 8 is a flowchart indicating flow of first display OFF control according to a second embodiment; and
Fig. 9 is a flowchart indicating flow of second display OFF control according to the second embodiment.

### DESCRIPTION OF THE EMBODIMENTS

In recent years, a vehicle on which a plurality of displays is provided in a front portion of a vehicle interior has been developed. In the vehicle having such a configuration, a driver may feel that display of the plurality of displays is too bright or may feel it difficult to view the display of the plurality of displays. As a measure against such a case, it is conceivable that the driver of the vehicle adjusts luminance of each of the plurality of displays. However, there is a possibility that operation of individually adjusting luminance of the plurality of displays may be troublesome for the driver.

To address this, an in-vehicle system that is one aspect of the present disclosure may be an in-vehicle system including a first display device including a first display unit provided in front of a driver's seat in a vehicle interior, a second display device including a second display unit provided closer to a passenger's seat than the first display unit in a front portion of the vehicle interior, and an information processing apparatus that controls the first display device and the second display device, each of the first display unit and the second display unit may include a touch panel, and the information processing apparatus may include a controller configured to execute, in a case where a signal that gives a command to adjust luminance of the first display unit is received from the touch panel of the first display unit, also adjusting luminance of the second display unit in the same adjustment direction, at the same timing, and at the same rate as an adjustment direction, a timing, and a rate of luminance adjustment of the first display unit by transmitting a control signal for executing luminance control to the first display device and the second display device.

The in-vehicle system may include the first display device and the second display device. The first display device includes the first display unit. The first display unit is provided in front of the driver's seat in the vehicle interior. The second display device includes the second display unit. The second display unit is provided closer to the passenger's seat than the first display unit in the front portion of the vehicle interior. In other words, in the vehicle interior of the vehicle on which the in-vehicle system is mounted, at least two display units of the first display unit and the second display unit are provided in the front portion. Further, the in-vehicle system may further include the information processing apparatus. The information processing apparatus includes the controller that controls the first display device and the second display device.

Here, for example, if the driver of the vehicle performs operation for adjusting luminance of the first display unit on the first display device, the first display device accepts a luminance adjustment command of the first display unit. Then, in a case where the first display device accepts the luminance adjustment command of the first display unit, the controller of the information processing apparatus may execute processing of adjusting the luminance of the first display unit. In this event, the controller of the information processing apparatus may also execute processing of adjusting luminance of the second display unit of the second display device in coordination with luminance adjustment of the first display unit. In this case, the controller may adjust the luminance of the second display unit in the same adjustment direction, at the same timing, and at the same rate as an adjustment direction, a timing, and a rate of the luminance adjustment of the first display unit.

According to the in-vehicle system as described above, not only the luminance of the first display unit, but also the luminance of the second display unit can be adjusted by the driver only performing operation for adjusting the luminance of the first display unit on the first display device arranged at a position closer to the driver's seat. It is therefore possible to improve convenience upon adjustment of the luminance of the first display unit and the second display unit in a case where the driver of the vehicle feels that display of the first display unit and the second display unit is too bright or feels it difficult to view the display of the first display unit and the second display unit.

Specific embodiments of the present disclosure will be described below based on the drawings. Dimensions, materials, shapes, relative arrangement, and the like, described in the present embodiment do not intend to limit the technical scope of the present disclosure thereto unless otherwise specified.

### <First Embodiment>

### (Schematic Configuration of System)

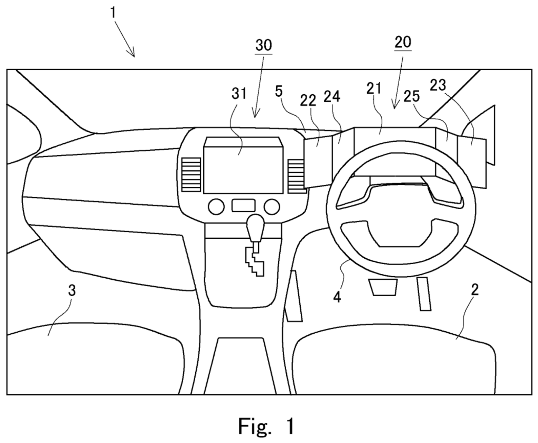

Fig. 1 is a view illustrating an aspect of a front portion of a vehicle interior of a vehicle according to the present embodiment. In the vehicle interior of a vehicle 1, a driver's seat 2 and a passenger's seat 3 are provided. Note that the vehicle 1 of the present embodiment is a right-hand drive vehicle, and the driver's seat 2 is provided on a right side in a traveling direction of the vehicle 1. A steering wheel 4 is disposed in front of the driver's seat 2. The steering wheel 4 may be a circular steering wheel or a U-shaped steering wheel (so-called irregularly shaped steering wheel). The steering wheel 4 is connected to a steering device provided in the vehicle 1 via a steering column. The steering column is covered with a column cover. Further, the passenger's seat 3 is provided on a left side (left side in the traveling direction of the vehicle 1) of the driver's seat 2 in the vehicle interior of the vehicle 1.

A first display device 20 and a second display device 30 are provided in the front portion of the vehicle interior of the vehicle 1. The first display device 20 is provided in front of the driver's seat (in front of the steering wheel 4) in the vehicle interior. The second display device 30 is provided in a substantially central portion (at an intermediate position between the driver's seat 2 and the passenger's seat 3) in the front portion of the vehicle interior.

The first display device 20 includes a meter display 21, an inner display 22, an outer display 23, an inner connection display 24, and an outer connection display 25. The meter display 21 is located in front of the driver's seat 2 (at a substantially central portion in front of the driver's seat 2). The inner display 22 is located on a rear side of the meter display 21 in the vehicle 1 and on an inner side of the vehicle 1. The outer display 23 is located on a rear side of the meter display 21 in the vehicle 1 and on an outer side of the vehicle 1. The inner connection display 24 connects the meter display 21 and the inner display 22. The outer connection display 25 connects the meter display 21 and the outer display 23.

Note that in the present embodiment, the meter display 21, the inner display 22, the outer display 23, the inner connection display 24, and the outer connection display 25 correspond to a "first display unit" according to the present disclosure. However, a configuration of the "first display unit" according to the present disclosure is not necessarily limited to such a configuration including a plurality of displays. The "first display unit" according to the present disclosure may be constituted with only one display. Further, in the present embodiment, the meter display 21 corresponds to an "instrument portion" according to the present disclosure, and the inner display 22 and the outer display 23 correspond to a "pair of displays" according to the present disclosure.

Here, the outer side of the vehicle 1 refers to a side closer to the outside of the vehicle 1 as viewed from the driver's seat 2 and refers to a door side of the driver's seat 2. Further, the inner side of the vehicle 1 refers to the passenger's seat 3 side as viewed from the driver's seat 2 and refers to a door side of the passenger's seat 3. For example, in the vehicle 1 in which the steering wheel is provided on a right side of the vehicle 1, the outer side of the vehicle 1 indicates the right side of the vehicle 1, and the inner side of the vehicle 1 indicates a left side of the vehicle 1. Further, for example, in the vehicle 1 in which the steering wheel 4 is provided on the left side of the vehicle 1, the outer side of the vehicle 1 indicates the left side of the vehicle 1, and the inner side of the vehicle 1 indicates the right side of the vehicle 1.

The meter display 21, the inner display 22, the outer display 23, the inner connection display 24, and the outer connection display 25 are all displays including touch panels. Note that it is only necessary that at least the inner display 22 and the outer display 23 include the touch panels. The meter display 21, the inner display 22, the outer display 23, the inner connection display 24, and the outer connection display 25 may be formed by deforming one touch screen or may be formed by combining individual touch screens.

The second display device 30 includes a center display 31. The center display 31 is located at a substantially central portion (intermediate position between the driver's seat 2 and the passenger's seat 3) in the front portion of the vehicle interior. In other words, the center display 31 is provided closer to the passenger's seat 3 than the meter display 21, the inner display 22, the outer display 23, the inner connection display 24, and the outer connection display 25 of the first display device 20. Auxiliary information (for example, car navigation information) regarding driving to be provided to the driver of the vehicle 1 may be displayed on the center display 31. Further, information regarding entertainment such as audio or TV may be displayed on the center display 31. Further, the center display 31 is also a display including a touch panel in a similar manner to the display of the first display device 20. Still further, information regarding a switch, a button, and the like, for performing operation related to the center display 31 is displayed on the center display 31. Further, a slider switch for performing operation of adjusting luminance of the center display 31 is displayed on the center display 31.

Note that in the present embodiment, the center display 31 corresponds to a "second display unit" according to the present disclosure. However, a position where the "second display unit" according to the present disclosure is provided is not limited to the intermediate position between the driver's seat and the passenger's seat.

Note that as a touch panel of each display of the first display device 20 and the second display device, for example, a pressure-sensitive touch panel that detects a pressure when a user presses the panel, a capacitive touch panel that detects change of capacitance when the user presses the panel, or the like, can be employed. Further, the display is, for example, a liquid crystal display (LCD), an electroluminescence (EL) panel, or the like. In the following description, touch by the user means touch on the touch panel by the user.

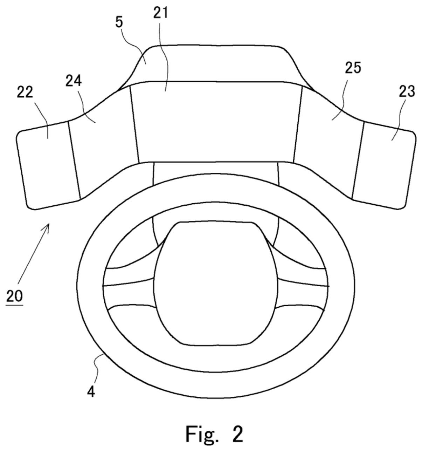

Here, a more detailed configuration of the first display device 20 will be described based on Fig. 2. Fig. 2 is a view illustrating a schematic configuration of the first display device 20 and its circumference. The first display device 20 is fixed to an instrument panel 5. The meter display 21 is a horizontally elongated display, and the inner display 22, the outer display 23, the inner connection display 24, and the outer connection display 25 are vertically elongated displays. The meter display 21 is arranged such that a screen faces rearward of the vehicle and is arranged in parallel to a left and right direction (vehicle width direction) of the vehicle 1. Note that the meter display 21 may be arranged while being inclined to face slightly upward.

The inner connection display 24 is connected to an end portion on the vehicle inner side, of the meter display 21. The inner connection display 24 is a display extending to the rear side of the vehicle 1 and the inner side of the vehicle 1 from the end portion on the vehicle inner side, of the meter display 21. The inner display 22 is connected to an end portion on the vehicle inner side, of the inner connection display 24. The inner display 22 is a display extending to the rear side of the vehicle 1 and the inner side of the vehicle 1 from the end portion on the vehicle inner side, of the inner connection display 24. Note that an angle of the inner display 22 with respect to the meter display 21 is smaller than an angle of the inner connection display 24 with respect to the meter display 21. The inner connection display 24 is connected to the meter display 21 and the inner display 22 while being curved. The inner connection display 24 includes a curved surface that dents on a vehicle front side at a connection portion with the meter display 21 and includes a curved surface that bulges on a vehicle rear side at a connection portion with the inner display 22. Note that the meter display 21 and the inner display 22 may include curved surfaces.

The outer connection display 25 is connected to an end portion on a vehicle outer side, of the meter display 21. The outer connection display 25 is a display extending to the rear side of the vehicle 1 and the outer side of the vehicle 1 from the end portion on the vehicle outer side, of the meter display 21. The outer display 23 is connected to an end portion on the vehicle outer side, of the outer connection display 25. The outer display 23 is a display extending to the rear side of the vehicle 1 and the outer side of the vehicle 1 from the end portion on the vehicle outer side, of the outer connection display 25. Note that an angle of the outer display 23 with respect to the meter display 21 is smaller than an angle of the outer connection display 25 with respect to the meter display 21. The outer connection display 25 is connected to the meter display 21 and the outer display 23 while being curved. The outer connection display 25 includes a curved surface that dents on the vehicle front side at a connection portion with the meter display 21 and includes a curved surface that bulges on the vehicle rear side at a connection portion with the outer display 23. Note that the meter display 21 and the outer display 23 may include curved surfaces.

In this manner, in the first display device 20, the display extends in the left and right direction (vehicle width direction) from an upper portion of the steering column. Further, a display extending from a central side in front of the driver's seat 2 to each of the vehicle inner side and the vehicle outer side bends toward the steering wheel 4 so as to protrude towards the vehicle rear side than in the middle. Still further, in the display protruding towards the rear of the vehicle, each of portions located on both left and right end portions is inclined to the vehicle inner side or the vehicle outer side with respect to the portion on the central side. As a result of the display of the first display device 20 having such a shape, the inner display 22 and the outer display 23 are arranged in the vicinity of a gripping portion that is a portion to be gripped by the driver on the steering wheel 4.

Further, each of the inner display 22 and the outer display 23 has an angle with respect to the left and right direction of the steering wheel 4 and is arranged to be inclined toward the steering wheel 4. In other words, the inner display 22 protrudes more rearward of the vehicle 1 as it goes inward of the vehicle 1, and the outer display 23 is arranged to protrude more rearward of the vehicle 1 as it goes outward of the vehicle 1. In this manner, each of the inner display 22 and the outer display 23 is arranged to face the driver.

The meter display 21 displays information necessary for traveling of the vehicle 1 such as, for example, a speed of the vehicle 1, an engine rotation speed (in a case where the vehicle 1 has an engine), a charging/discharging condition (in a case where the vehicle 1 includes a battery for driving), a traveling distance, and a state of an ADAS.

The inner display 22 displays, for example, information regarding convenience of occupants of the vehicle 1 as content. The information regarding convenience of the occupants of the vehicle 1 includes information for providing entertainment to the occupants of the vehicle 1. The information regarding convenience of the occupants of the vehicle 1 may include information related to comfortability of the occupants, and the like. The information regarding comfortability and convenience of the occupants includes, for example, information regarding switches, buttons, and the like, for performing operation of audio, operation of a navigation device, operation of an air conditioner, operation of a phone, operation of a clock, operation of a voice assistant, and the like, and information regarding operating conditions of these devices.

Further, on the inner display 22, a slider switch for performing operation of adjusting luminance of a plurality of displays 21, 22, 23, 24, 25 provided in the first display device 20 is displayed as the information regarding convenience of the occupants of the vehicle 1.

The outer display 23 displays, for example, information regarding control of the vehicle 1 as content. The information regarding control of the vehicle 1 includes information regarding traveling of the vehicle 1. The information regarding control of the vehicle 1 includes, for example, information regarding switches, buttons, and the like, for performing operation of a headlight, operation of a wiper, operation of a sideview mirror, operation of the ADAS, operation of a drive mode, operation of a vehicle height, operation of a position of the steering wheel, operation of a seat position, and the like, and information regarding operating conditions of these devices.

Note that the information to be displayed on the inner display 22 and the outer display 23 is not limited to the above. The inner display 22 may display the information regarding control of the vehicle 1, and the outer display 23 may display the information regarding convenience of the occupants of the vehicle 1. Further, the information to be displayed on the inner display 22 and the outer display 23 can be freely determined.

For example, when content is moved between the meter display 21 and the inner display 22, the inner connection display 24 displays an image in accordance with the content. When content is moved between the meter display 21 and the outer display 23, the outer connection display 25 displays an image in accordance with the content. Note that the inner connection display 24 and the outer connection display 25 may display some kind of information or may display nothing during a period other than a period when the content is moved.

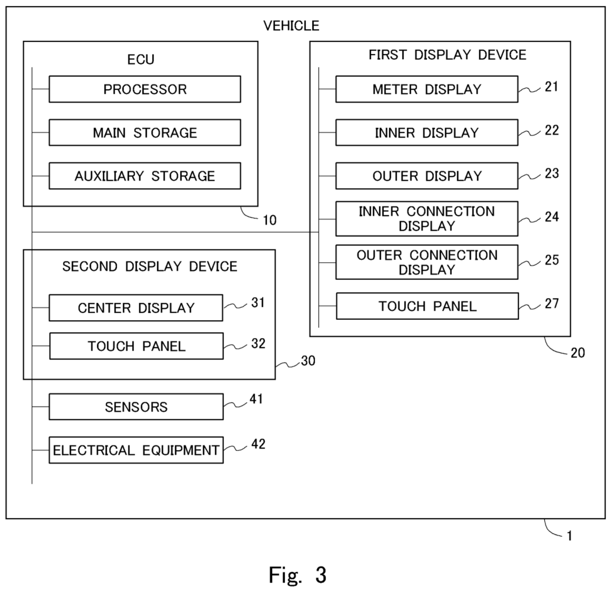

Fig. 3 is a block diagram schematically illustrating an example of a hardware configuration of a system mounted on the vehicle 1. The system mounted on the vehicle 1 includes the ECU 10, the first display device 20, the second display device 30, sensors 41, and electrical equipment 42.

The ECU 10 can be constituted as a computer including a processor (such as a CPU and a GPU), a main memory (such as a RAM and a ROM), and an auxiliary memory (such as an EPROM, a hard disk drive, and a removable medium). In the auxiliary memory, an operating system (OS), various kinds of programs, various kinds of tables, and the like, are stored, and respective functions (software modules) matching predetermined purposes as will be described later can be implemented by programs stored therein being executed. However, some or all of the functions may be, for example, implemented as hardware modules by hardware circuits such as an ASIC and an FPGA. The first display device 20, the second display device 30, the sensors 41, and the electrical equipment 42 are connected to the ECU 10. Note that in the present embodiment, the ECU 10 corresponds to an "information processing apparatus" according to the present disclosure.

The first display device 20 includes the meter display 21, the inner display 22, the outer display 23, the inner connection display 24, the outer connection display 25, and the touch panel 27. The touch panel 27 is a unit for detecting touch operation performed on the meter display 21, the inner display 22, the outer display 23, the inner connection display 24, and the outer connection display 25. The touch panel 27 is arranged at each of the meter display 21, the inner display 22, the outer display 23, the inner connection display 24, and the outer connection display 25. By this means, each display is constituted to allow touch operation. The meter display 21, the inner display 22, the outer display 23, the inner connection display 24, the outer connection display 25, and the touch panel 27 may be constituted by deforming a shape of one touch screen.

The second display device 30 includes the center display 31 and a touch panel 32. The touch panel 32 is a unit for detecting touch operation performed on the center display 31. The touch panel 32 is arranged at the center display 31. By this means, the center display 31 is constituted to allow touch operation.

The sensors 41 are an aggregate of a plurality of sensors for acquiring sensor data to be utilized in traveling of the vehicle 1. The sensors may include a sensor that acquires a physical amount, a sensor that acquires image data, and the like. The sensors 41 include, for example, a sensor that detects a state of the vehicle 1, a sensor that detects action of the driver, and the like. The sensors 41 include, for example, a speed sensor, an acceleration sensor, an accelerator position sensor that detects a position of an accelerator pedal, a brake sensor that detects a position of a brake pedal, a steering wheel angle sensor that detects an angle of the steering wheel, an engine rotation speed sensor that detects an engine rotation speed, a yaw rate sensor, an indicator switch sensor (sensor that detects a state of a switch of an indicator), a shift position sensor, a sensor that detects position information (GPS sensor), a sensor that detects an in-vehicle temperature, a sensor that detects an outside temperature, a radar that measures a distance to an object.

The electrical equipment 42 is an aggregate of electrical equipment to be utilized in the vehicle 1. The electrical equipment 42 includes, for example, an air conditioner, a navigation device, an audio device, a phone, a wiper, a headlight, a sideview mirror, a powered seat, a voice assistant, and the like.

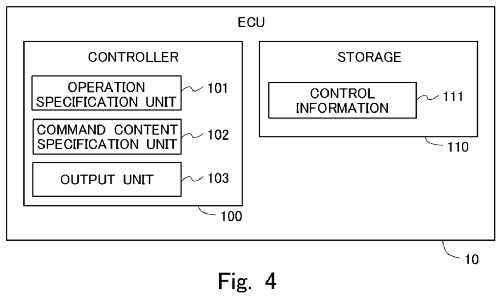

Here, a functional configuration of the ECU 10 will be described based on Fig. 4. Fig. 4 is a block diagram schematically illustrating an example of the functional configuration of the ECU 10. The ECU 10 includes a controller 100 and a storage 110 as functional components. The controller 100 is, for example, a functional component to be provided by the processor executing various kinds of programs stored in an auxiliary storage. The controller 100 includes an operation specification unit 101, a command content specification unit 102, and an output unit 103. The storage 110 is a functional component that stores information. The storage 110 includes a main storage and the auxiliary storage.

The controller 100 executes control of the first display device 20 and the second display device 30 in accordance with input operation by a user who is an occupant of the vehicle 1. Specifically, the first display device 20 accepts a control command from the user via the touch panel 27. In this event, a signal in accordance with input operation on one of the plurality of displays 21, 22, 23, 24, 25 by the user is transmitted from the touch panel 27 to the ECU 10. Further, the second display device 30 accepts a control command from the user via the touch panel 32. In this event, a signal in accordance with input operation on the center display 31 by the user is transmitted from the touch panel 32 to the ECU 10.

Then, in the controller 100 of the ECU 10, the operation specification unit 101 specifies the input operation on one of the displays by the user based on the signal received from the touch panel 27 of the first display device 20 or the touch panel 32 of the second display device 30. For example, the operation specification unit 101 specifies a portion touched by the user on one of the plurality of displays 21, 22, 23, 24, 25 of the first display device 20 or the center display 31 of the second display device 30. Further, the operation specification unit 101 specifies operation content (such as, for example, flick, swipe, tap, pinch, double tap, long tap and multi-tap) of the input operation performed by the user on one of the plurality of displays 21, 22, 23, 24, 25 of the first display device 20 or the center display 31 of the second display device 30.

Further, the storage 110 stores control information 111 indicating control content to be performed on the first display device 20 or the second display device 30. In the storage 110, the control information 111 is stored in association with a portion touched by the user on one of the plurality of displays 21, 22, 23, 24, 25 of the first display device 20 or the center display 31 of the second display device 30 and operation content of the input operation by the user. Then, the command content specification unit 102 specifies command content of the control command accepted from the user by the first display device 20 or the second display device 30 by checking the portion touched by the user and the operation content of the input operation by the user specified by the operation specification unit 101 against the control information 111 stored in the storage 110. If the command content specification unit 102 specifies the command content of the control command, the output unit 103 transmits a control signal in accordance with the specified command content to the first display device 20 or the second display device 30. In the first display device 20 or the second display device 30, control in accordance with the control signal is executed by the control signal transmitted by the output unit 103 being received. Further, there is also a case where the command content of the control command specified by the command content specification unit 102 is a control command issued for a device other than the first display device 20 and the second display device 30. In this case, the output unit 103 transmits a control signal in accordance with the specified command content to the device for which the control command is issued.

### (Luminance Adjustment)

Next, luminance adjustment to be performed for the plurality of displays 21, 22, 23, 24, 25 provided in the first display device 20 or the center display 31 provided in the second display device 30 will be described. In the vehicle 1, the meter display 21, the inner display 22, the outer display 23, the inner connection display 24, and the outer connection display 25 of the first display device 20 and the center display 31 of the second display device 30 are provided in the front portion of the vehicle interior. Thus, there is a case where the driver of the vehicle 1 may feel that display of these displays is too bright. Further, there is also a case where the driver of the vehicle 1 may feel it difficult to view the display of these displays.

In such cases, the driver can adjust luminance of these displays. Specifically, the driver can adjust luminance of the plurality of displays 21, 22, 23, 24, 25 provided in the first display device 20 by performing touch operation on the slider switch for adjusting luminance displayed on the inner display 22. Further, the driver can adjust luminance of the center display 31 provided in the second display device 30 by performing touch operation on the slider switch for adjusting luminance displayed on the center display 31.

Here, when the driver feels that the display of the plurality of displays 21, 22, 23, 24, 25 provided in the first display device 20 is too bright, the driver tends to feel that the display of the center display 31 provided in the second display device 30 is also too bright. Further, when the driver feels it difficult to view the display of the plurality of displays 21, 22, 23, 24, 25 provided in the first display device 20, the driver tends to also feel it difficult to view the display of the center display 31 provided in the second display device 30.

Then, when the driver feels that the display of each display is too bright or feels it difficult to view the display, there is a case where the driver tries to adjust the luminance of each display. In this event, there is a case where the driver tries to adjust the luminance of both the plurality of displays 21, 22, 23, 24, 25 provided in the first display device 20 and the center display 31 provided in the second display device 30. In this event, there is a possibility that individual touch operation on the slider switches for adjusting luminance respectively for the first display device 20 and the second display device 30 may be troublesome for the driver.

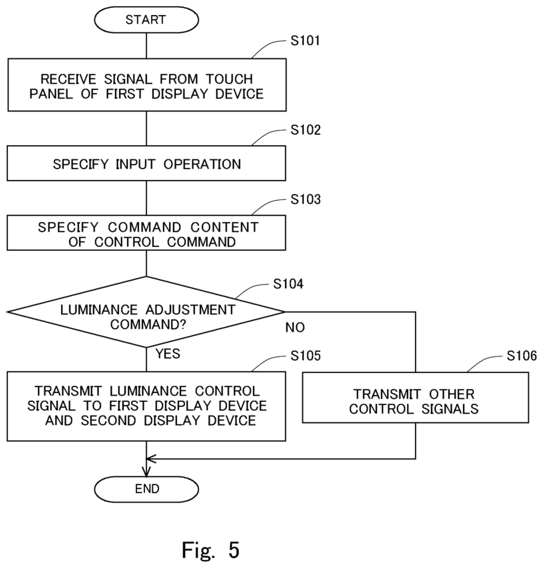

Thus, in the present embodiment, the ECU 10 executes first luminance adjustment control of adjusting the luminance of the center display 31 provided in the second display device 30 in coordination with luminance adjustment of the plurality of displays 21, 22, 23, 24, 25 provided in the first display device 20. Flow of the first luminance adjustment control according to the present embodiment will be described below based on Fig. 5. Fig. 5 is a flowchart indicating the flow of the first luminance adjustment control according to the present embodiment. The present flow is executed by the controller 100 of the ECU 10.

In the present flow, first, in S101, a signal in accordance with the input operation by the user, transmitted from the touch panel 27 of the first display device 20, is received. Then, in S102, the input operation by the user on one of the plurality of displays 21, 22, 23, 24, 25 of the first display device 20 is specified based on the signal received in S101. As described above, the processing in S102 is executed by the operation specification unit 101. Then, in S103, command content of the control command accepted by the first display device 20 from the user is specified based on the input operation by the user specified in S102. As described above, the processing in S103 is executed by the command content specification unit 102.

Here, in a case where the input operation by the user is operation on the slider switch for adjusting luminance displayed on the inner display 22 of the first display device 20, a signal that gives a command to adjust luminance of the plurality of displays 21, 22, 23, 24, 25 provided in the first display device 20 is received in S101. In this event, in S102, it is specified that the input operation by the user is operation on the slider switch for adjusting luminance displayed on the inner display 22. Further, an operation direction and an operation amount of the slider switch for adjusting luminance are also specified. Still further, in S103, it is specified that command content of the control command accepted by the user is luminance adjustment of the plurality of displays 21, 22, 23, 24, 25 provided in the first display device 20. Further, a direction (increase or decrease of luminance) and a rate of the luminance adjustment are also specified based on the operation direction and the operation amount of the slider switch for adjusting luminance.

Then, subsequent to the processing in S103, processing in S104 is executed. In S104, it is determined whether or not the command content of the control command specified in S103 is luminance adjustment of the plurality of displays 21, 22, 23, 24, 25 provided in the first display device 20.

In a case where positive determination is made in S104, processing in S105 is executed next. In S105, a control signal for executing luminance control is transmitted to the first display device 20 and the second display device 30. In other words, a control signal for controlling the luminance of the plurality of displays 21, 22, 23, 24, 25 in the direction and at the rate of the luminance adjustment specified in S103 is transmitted to the first display device 20. Further, a control signal for controlling the luminance of the center display 31 in the direction and at the rate of the luminance adjustment specified in S103 is transmitted to the second display device 30. By this means, luminance control of the plurality of displays 21, 22, 23, 24, 25 is executed in the first display device 20, and luminance control of the center display 31 is executed in the second display device 30.

On the other hand, in a case where negative determination is made in S104, that is, in a case where the command content of the control command accepted by the first display device 20 from the user is control other than luminance adjustment of the plurality of displays 21, 22, 23, 24, 25 provided in the first display device 20, processing in S106 is executed next. In S106, a control signal for executing control in accordance with the command content of the control command accepted by the first display device 20 from the user is transmitted to a device for which the control command is issued. By this means, control in accordance with the control command is executed in the device for which the control command is issued.

According to the above-described flow, in a case where the first display device 20 accepts a luminance adjustment command of the plurality of displays 21, 22, 23, 24, 25, not only luminance adjustment of the plurality of displays 21, 22, 23, 24, 25, but also luminance adjustment of the center display 31 of the second display device 30 is performed in coordination with the luminance adjustment of the plurality of displays 21, 22, 23, 24, 25. In other words, the luminance of the center display 31 of the second display device 30 is adjusted in the same adjustment direction, at the same timing, and at the same rate as the adjustment direction, the timing and the rate of the luminance adjustment of the plurality of displays 21, 22, 23, 24, 25 provided in the first display device 20.

Here, the first display device 20 is arranged at a position closer to the driver's seat than the second display device 30 (more specifically, at a position close to the steering wheel 4). In other words, the first display device 20 is arranged at a position at which the driver can more easily perform operation than the second display device 30. Further, according to the above-described flow, by the driver only performing operation for adjusting the luminance of the plurality of displays 21, 22, 23, 24, 25 for the first display device 20 arranged at the position at which the driver can more easily perform operation, not only the luminance of the plurality of displays 21, 22, 23, 24, 25 of the first display device 20, but also the luminance of the center display 31 of the second display device 30 can be adjusted. Thus, the driver does not have to individually perform touch operation on the slider switches for adjusting luminance respectively for the first display device 20 and the second display device 30. Thus, for example, in a case where the driver of the vehicle feels that display of the plurality of displays 21, 22, 23, 24, 25 of the first display device 20 and the center display 31 of the second display device 30 is too bright or feels it difficult to view the display, it is possible to improve convenience upon adjustment of the luminance of these displays.

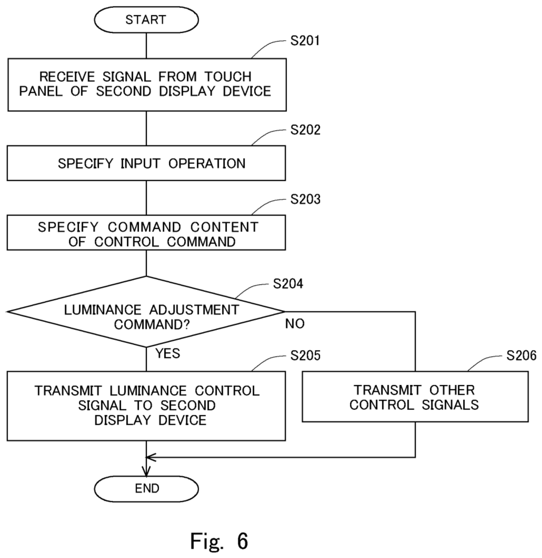

Further, in the present embodiment, the ECU 10 executes second luminance adjustment control of adjusting only the luminance of the center display 31 provided in the second display device 30. Flow of second luminance adjustment control according to the present embodiment will be described below based on Fig. 6. Fig. 6 is a flowchart indicating the flow of the second luminance adjustment control according to the present embodiment. The present flow is executed by the controller 100 of the ECU 10.

In the present flow, first, in S201, a signal in accordance with the input operation by the user, transmitted from the touch panel 32 of the second display device 30 is received. Then, in S202, the input operation by the user on the center display 31 of the second display device 30 is specified based on the signal received in S201. As described above, the processing in S202 is executed by the operation specification unit 101 in a similar manner to the processing in S102 in the flow indicated in Fig. 5. Then, in S203, command content of the control command accepted by the second display device 30 from the user is specified based on the input operation by the user specified in S202. As described above, the processing in S203 is executed by the command content specification unit 102 in a similar manner to the processing in S103 in the flow indicated in Fig. 5.

Here, in a case where the input operation by the user is operation on the slider switch for adjusting luminance displayed on the center display 31 of the second display device 30, a signal that gives a command to adjust the luminance of the center display 31 provided in the second display device 30 is received in S201. In this event, it is specified in S202 that the input operation by the user is the operation on the slider switch for adjusting luminance displayed on the center display 31. Further, an operation direction and an operation amount of the slider switch for adjusting luminance are also specified. Still further, it is specified in S303 that the command content of the control command accepted from the user is luminance adjustment of the center display 31 provided in the second display device 30. Further, a direction (increase or decrease of luminance) and a rate of the luminance adjustment are specified based on the operation direction and the operation amount of the slider switch for adjusting luminance.

Then, processing in S204 is executed subsequent to the processing in S203. In S204, it is determined whether or not the command content of the control command specified in S203 is luminance adjustment of the center display 31 provided in the second display device 30.

In a case where positive determination is made in S204, processing in S205 is executed next. In S205, a control signal for executing luminance control is transmitted to the second display device 30. In other words, a control signal for controlling the luminance of the center display 31 in the direction and at the rate of the luminance adjustment specified in S203 is transmitted to the second display device 30. By this means, in the second display device 30, luminance control of the center display 31 is executed. However, in the processing in S205, the control signal is not transmitted to the first display device 20 unlike with the processing in S105 indicated in Fig. 5.

On the other hand, in a case where negative determination is made in S204, that is, in a case where the command content of the control command accepted by the second display device 30 from the user is control other than luminance adjustment of the center display 31 provided in the second display device 30, processing in S206 is executed next. In S206, a control signal for executing control in accordance with the command content of the control command accepted by the second display device 30 from the user is transmitted to a device for which the control command is issued. By this means, control in accordance with the control command is executed in the device for which the control command is issued.

According to the above-described flow, in a case where the second display device 30 accepts a luminance adjustment command of the center display 31, only the luminance adjustment of the center display 31 is performed. In other words, luminance adjustment of the plurality of displays 21, 22, 23, 24, 25 provided in the first display device 20 is not performed.

Here, the second display device 30 is located at an intermediate position between the driver's seat 2 and the passenger's seat 3 in the front portion of the vehicle interior. In other words, the second display device 30 is arranged at a position at which a passenger located on the passenger's seat 3 can easily perform operation. Thus, unlike with the plurality of displays 21, 22, 23, 24, 25 provided in the first display device 20, there is a case where the center display 31 provided in the second display device 30 is operated also by the passenger located on the passenger's seat 3 as well as the driver. For example, there is also a case where the passenger located on the passenger's seat 3 feels that display of the center display 31 is too bright or feels it difficult to view the display of the center display 31. In such a case, the passenger can adjust the luminance of the center display 31 provided in the second display device 30 by performing touch operation on the slider switch for adjusting luminance displayed on the center display 31.

However, in a case where the passenger performs operation for adjusting the luminance of the center display 31, on the second display device 30, if the luminance of the plurality of displays 21, 22, 23, 24, 25 of the first display device 20 is adjusted in coordination with the luminance adjustment of the center display 31, luminance adjustment that is not intended by the driver of the vehicle 1 is performed for the plurality of displays 21, 22, 23, 24, 25. If such luminance adjustment that is not intended by the driver is performed for the plurality of displays 21, 22, 23, 24, 25 located in front of the driver's seat, there is a possibility that the driver feels bothersome.

In contrast to this, according to the second luminance adjustment control, as described above, in a case where the second display device 30 accepts the luminance adjustment command of the center display 31, only luminance adjustment of the center display 31 is performed, and luminance adjustment of the plurality of displays 21, 22, 23, 24, 25 provided in the first display device 20 is not performed. It is therefore possible to prevent luminance adjustment that is not intended by the driver from being performed at the plurality of displays 21, 22, 23, 24, 25 provided in the first display device 20.

### <Modification>

A modification of the present embodiment will be described next. When an environment outside the vehicle 1 is dark, for example, during the night, when the driver feels that the display of the plurality of displays 21, 22, 23, 24, 25 provided in the first display device 20 is too bright, the driver is highly likely to feel that the display of the center display 31 provided in the second display device 30 is also too bright. Thus, under such an environment, by the luminance of the center display 31 provided in the second display device 30 being adjusted in coordination with luminance adjustment of the plurality of displays 21, 22, 23, 24, 25 provided in the first display device 20, convenience of the luminance adjustment is improved.

On the other hand, when the environment outside the vehicle 1 is bright, for example, during daytime, even when the driver feels that the display of the plurality of displays 21, 22, 23, 24, 25 provided in the first display device 20 is too bright, the driver may not feel that the display of the center display 31 provided in the second display device 30 is too bright. Thus, under such an environment, if adjustment of decreasing the luminance of the center display 31 provided in the second display device 30 is performed in coordination with adjustment of decreasing the luminance of the plurality of displays 21, 22, 23, 24, 25 provided in the first display device 20, the driver could rather feel it difficult to view the display of the center display 31.

Thus, in the first luminance adjustment control according to the present modification, whether or not to execute the luminance adjustment of the center display 31 provided in the second display device 30 in coordination with the luminance adjustment of the plurality of displays 21, 22, 23, 24, 25 provided in the first display device 20 is switched in accordance with hours. More specifically, whether or not to execute the luminance adjustment of the center display 31 provided in the second display device 30 in coordination with the luminance adjustment of the plurality of displays 21, 22, 23, 24, 25 is switched based on whether or not hours during which the first display device 20 accepts the luminance adjustment command of the plurality of displays 21, 22, 23, 24, 25 are hours during which the headlight of the vehicle 1 is automatically turned on.

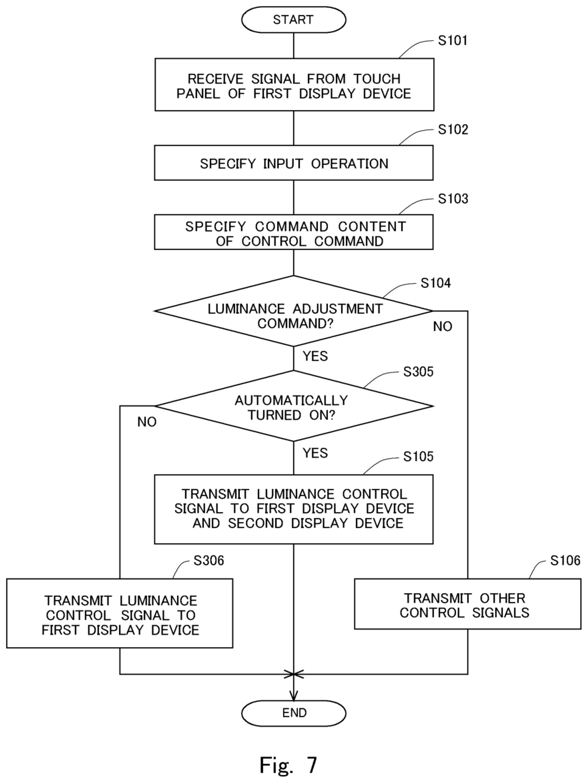

The first luminance adjustment control according to the present modification will be described below based on Fig. 7. Fig. 7 is a flowchart indicating flow of the first luminance adjustment control according to the present modification. The present flow is executed by the controller 100 of the ECU 10. Note that in the present flow, the processing to be executed in respective steps from S101 to S106 is the same as the processing to be executed in steps of the same reference numerals in the flow indicated in Fig. 5. Thus, description of the processing to be executed in these steps will be omitted.

In the present flow, in a case where positive determination is made in S104, that is, in a case where the first display device 20 accepts the luminance adjustment command of the plurality of displays 21, 22, 23, 24, 25, processing in S305 is executed next. In S305, it is determined whether or not the headlight of the vehicle 1 is automatically turned on. In a case where positive determination is made in S305, that is, in a case where the headlight of the vehicle 1 is automatically turned on, the processing in S105 is executed next. By this means, the luminance control of the plurality of displays 21, 22, 23, 24, 25 is executed at the first display device 20, and luminance control of the center display 31 is executed at the second display device 30.

On the other hand, in a case where negative determination is made in S305, that is, in a case where the headlight of the vehicle 1 is not automatically turned on, processing in S306 is executed next. In S306, a control signal for executing luminance control is transmitted to the first display device 20. In other words, a control signal for controlling the luminance of the plurality of displays 21, 22, 23, 24, 25 in the direction and at the rate of the luminance adjustment specified in S103 is transmitted to the first display device 20. By this means, luminance control of the plurality of displays 21, 22, 23, 24, 25 is executed at the first display device 20. However, in the processing in S306, unlike with the processing in S105, the control signal is not transmitted to the second display device 30.

Here, it is assumed that the environment outside the vehicle 1 is dark during hours while the headlight of the vehicle 1 is automatically turned on. According to the above-described flow, during such hours, the luminance adjustment of the center display 31 provided in the second display device 30 is executed in coordination with the luminance adjustment of the plurality of displays 21, 22, 23, 24, 25 provided in the first display device 20. On the other hand, during hours other than the hours while the headlight of the vehicle 1 is automatically turned on, it is assumed that the environment outside the vehicle 1 is bright. According to the above-described flow, the luminance adjustment of the center display 31 provided in the second display device 30 in coordination with the luminance adjustment of the plurality of displays 21, 22, 23, 24, 25 provided in the first display device 20 is not executed during such hours.

It is therefore possible to prevent occurrence of a phenomenon that the driver could rather feel it difficult to view the display of the center display 31 as a result of adjustment of decreasing the luminance of the center display 31 provided in the second display device 30 being executed in coordination with adjustment of decreasing the luminance of the plurality of displays 21, 22, 23, 24, 25 provided in the first display device 20.

Note that in the present modification, hours during which the luminance adjustment of the center display 31 provided in the second display device 30 is executed in coordination with the luminance adjustment of the plurality of displays 21, 22, 23, 24, 25 provided in the first display device 20 do not necessarily have to be the same as hours during which the headlight of the vehicle 1 is automatically turned on. For example, the hours during which the luminance adjustment of these displays is coordinated may be set in hours shifted by a predetermined period from the hours during which the headlight of the vehicle 1 is automatically turned on. Further, the hours during which the luminance adjustment of these displays is coordinated may be freely set by the driver.

### <Second Embodiment>

Also in the present embodiment, the hardware configuration of the system mounted on the vehicle 1 is similar to that of the first embodiment. Further, also in the present embodiment, the first luminance adjustment control and the second luminance adjustment control described above are executed by the ECU 10.

In the present embodiment, a switch for performing operation of turning OFF display of the plurality of displays 21, 22, 23, 24, 25 provided in the first display device 20 is displayed on the inner display 22. Further, a switch for performing operation of turning OFF display of the center display 31 provided in the second display device 30 is displayed on the center display 31. Thus, the driver can turn OFF the display of the plurality of displays 21, 22, 23, 24, 25 provided in the first display device 20 by performing touch operation on the switch for turning OFF display displayed on the inner display 22. Further, the driver can turn OFF the display of the center display 31 provided in the second display device 30 by performing touch operation on the switch for turning OFF display displayed on the center display 31.

Here, when the driver feels that the display of each display is too bright, there is a case where the driver tries to turn OFF the display of each display. In this event, there is also a case where the driver tries to turn OFF display of both the plurality of displays 21, 22, 23, 24, 25 provided in the first display device 20 and the center display 31 provided in the second display device 30. In this event, there is a possibility that the driver feels troublesome to individually perform touch operation on the switches for turning OFF display respectively for the first display device 20 and the second display device 30.

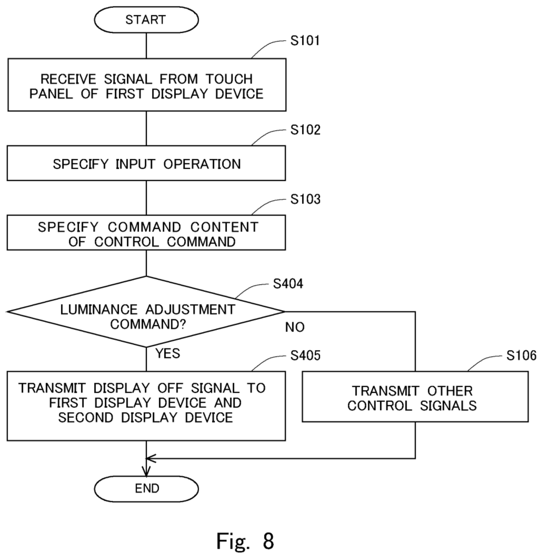

Thus, in the present embodiment, the ECU 10 executes first display OFF control of turning OFF the display of the center display 31 provided in the second display device 30 in coordination with turning OFF of the display of the plurality of displays 21, 22, 23, 24, 25 provided in the first display device 20. Flow of the first display control according to the present embodiment will be described below based on Fig. 8. Fig. 8 is a flowchart indicating the flow of the first display OFF control according to the present embodiment. The present flow is executed by the controller 100 of the ECU 10. Note that in the present flow, processing to be executed in respective steps from S101 to S103 and S106 is the same as the processing to be executed in steps of the same reference numerals in the flow indicated in Fig. 5. Thus, description of the processing to be executed in these steps will be omitted.

If the user who is an occupant of the vehicle 1 performs touch operation on the switch for turning OFF display displayed on the inner display 22 of the first display device 20, a signal in accordance with the input operation is transmitted from the touch panel 27 to the ECU 10. Thus, in a case where the input operation by the user is operation on the switch for turning OFF display displayed on the inner display 22 of the first display device 20, a signal that gives a command to turn OFF display of the plurality of displays 21, 22, 23, 24, 25 provided in the first display device 20 is received in S101. In this event, in S102, it is specified that the input operation by the user is operation on the switch for turning OFF display displayed on the inner display 22. Further, in S103, it is specified that command content of the control command accepted from the user is turning OFF of the display of the plurality of displays 21, 22, 23, 24, 25 provided in the first display device 20.

Then, subsequent to the processing in S103, processing in S404 is executed. In S404, it is determined whether or not the command content of the control command specified in S103 is turning OFF of the display of the plurality of displays 21, 22, 23, 24, 25 provided in the first display device 20.

In a case where positive determination is made in S404, processing in S405 is executed next. In S405, a control signal for executing display OFF control is transmitted to the first display device 20 and the second display device 30. In other words, a control signal for turning OFF display of the plurality of displays 21, 22, 23, 24, 25 is transmitted to the first display device 20. Further, a control signal for turning OFF display of the center display 31 is transmitted to the second display device 30. By this means, the display of the plurality of displays 21, 22, 23, 24, 25 is turned OFF at the first display device 20, and the display of the center display 31 is turned OFF at the second display device 30. On the other hand, in a case where negative determination is made in S404, the processing in S106 is executed next.

According to the above-described flow, in a case where the first display device 20 accepts the display OFF command of the plurality of displays 21, 22, 23, 24, 25, not only display of the plurality of displays 21, 22, 23, 24, 25 is turned OFF, but also display of the center display 31 of the second display device 30 is turned OFF in coordination with turning OFF of the display of the plurality of displays 21, 22, 23, 24, 25. In other words, not only the display of the plurality of display devices 21, 22, 23, 24, 25 of the first display device 20, but also the display of the center display 31 of the second display device 30 are turned OFF by the driver only performing operation for turning OFF the display of the plurality of displays 21, 22, 23, 24, 25 on the first display device 20 arranged at the position at which the driver can more easily perform operation.

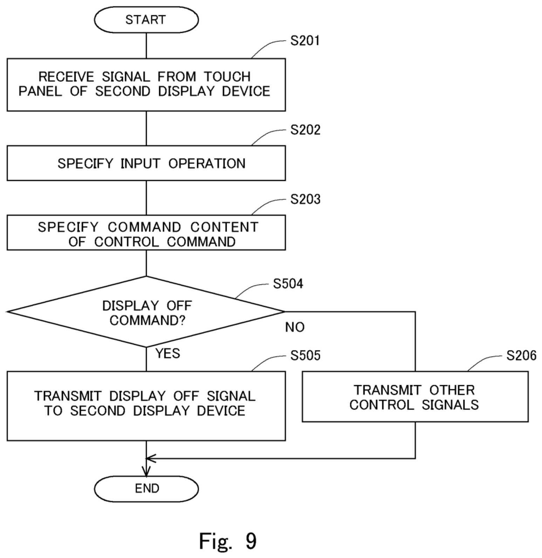

Further, in the present embodiment, the ECU 10 executes second display OFF control of turning OFF only the display of the center display 31 provided in the second display device 30. Flow of the second display OFF control according to the present embodiment will be described below based on Fig. 9. Fig. 9 is a flowchart indicating the flow of the second display OFF control according to the present embodiment. The present flow is executed by the controller 100 of the ECU 10. Note that in the present flow, processing to be executed in respective steps from S201 to S203 and S206 is the same as processing to be executed in the steps of the same reference numerals in the flow indicated in Fig. 6. Thus, description of the processing to be executed in these steps will be omitted.

If the user performs touch operation on the switch for turning OFF display displayed on the center display 31 of the second display device 30, a signal in accordance with the input operation is transmitted from the touch panel 32 to the ECU 10. Thus, in a case where the input operation by the user is operation on the switch for turning OFF display displayed on the center display 31 of the second display device 30, a signal that gives a command to turn OFF display of the center display 31 provided in the second display device 30 is received in S201. In this event, it is specified in S202 that the input operation by the user is operation on the switch for turning OFF display displayed on the center display 31. Further, it is specified in S203 that the command content of the control command accepted from the user is turning OFF of the display of the center display 31 provided in the second display device 30.

Then, subsequent to the processing in S203, processing in S504 is executed. In S504, it is determined whether or not the command content of the control command specified in S203 is turning OFF of the display of the center display 31 provided in the second display device 30.

In a case where positive determination is made in S504, processing in S505 is executed next. In S505, a control signal for executing display OFF control is transmitted to the second display device 30. In other words, a control signal for turning OFF the display of the center display 31 is transmitted to the second display device 30. By this means, display OFF control of the center display 31 is executed at the second display device 30. However, in the processing in S505, unlike with the processing in S205 indicated in Fig. 6, the control signal is not transmitted to the first display device 20. On the other hand, in a case where negative determination is made in S504, the processing in S206 is executed next.

According to the above-described flow, in a case where the second display device 30 accepts the display OFF command of the center display 31, only the display of the center display 31 is turned OFF. In other words, the display of the plurality of displays 21, 22, 23, 24, 25 provided in the first display device 20 is not turned OFF.

Here, the passenger located on the passenger's seat 3 can turn OFF the display of the center display 31 provided in the second display device 30 by performing touch operation on the switch for turning OFF display displayed on the center display 31. However, according to the second display OFF control, as described above, in a case where the second display device 30 accepts the display OFF command of the center display 31, only the display of the center display 31 is turned OFF, and the display of the plurality of displays 21, 22, 23, 24, 25 provided in the first display device 20 is not turned OFF. It is therefore possible to prevent turning OFF of the display that is not intended by the driver from being performed at the plurality of displays 21, 22, 23, 24, 25 provided in the first display device 20.

### <Other Embodiments>

The embodiments described above are merely examples, and the present disclosure may be changed and implemented as appropriate within the scope of the disclosure. Furthermore, processes and means described in the present disclosure may be freely combined to the extent that no technical conflict exists.

Furthermore, a process that is described to be performed by one apparatus may be shared and performed by a plurality of apparatuses. Processes described to be performed by different apparatuses may be performed by one apparatus. Which function is to be implemented by which hardware configuration (server configuration) in a computer system may be flexibly changed.

The present disclosure may also be implemented by supplying computer programs for implementing the functions described in the embodiments described above to a computer, and by one or more processors of the computer reading out and executing the programs. Such computer programs may be provided to the computer by a non-transitory computer-readable storage medium that can be connected to a system bus of the computer, or may be provided to the computer through a network. The non-transitory computer-readable storage medium may be any type of disk including magnetic disks (floppy (registered trademark) disks, hard disk drives (HDDs), etc.) and optical disks ( CD-ROMs, DVD discs, Blu-ray discs, etc.), and any type of medium suitable for storing electronic instructions, such as read-only memories (ROMs), random access memories (RAMs), EPROMs, EEPROMs, magnetic cards, flash memories, or optical cards.

## Claims

1. An in-vehicle system comprising a first display device (20) including a first display unit (21, 22, 23, 24, 25) provided in front of a driver's seat in a vehicle interior, a second display device (30) including a second display unit (31) provided closer to a passenger's seat than the first display unit (21, 22, 23, 24, 25) in a front portion of the vehicle interior, and an information processing apparatus (10) that controls the first display device (20) and the second display device (30),
each of the first display unit (21, 22, 23, 24, 25) and the second display unit (31) including a touch panel (27, 32), and
the information processing apparatus (10) comprising a controller (100) configured to execute:
in a case where a signal that gives a command to adjust luminance of the first display unit (21, 22, 23, 24, 25) is received from the touch panel (27) of the first display unit (21, 22, 23, 24, 25), also adjusting luminance of the second display unit (31) in the same adjustment direction, at the same timing, and at the same rate as an adjustment direction, a timing, and a rate of luminance adjustment of the first display unit (21, 22, 23, 24, 25) by transmitting a control signal for executing luminance control to the first display device (20) and the second display device (30).

2. An in-vehicle system comprising a first display device (20) including a first display unit (21, 22, 23, 24, 25) provided in front of a driver's seat in a vehicle interior, a second display device (30) including a second display unit (31) provided closer to a passenger's seat than the first display unit (21, 22, 23, 24, 25) in a front portion of the vehicle interior, and an information processing apparatus (10) that controls the first display device (20) and the second display device (30),
the information processing apparatus (10) comprising a controller (100) configured to execute:
in a case where the first display device (20) accepts a luminance adjustment command of the first display unit (21, 22, 23, 24, 25), also adjusting luminance of the second display unit (31) of the second display device (30) in coordination with luminance adjustment of the first display unit (21, 22, 23, 24, 25).

3. The in-vehicle system according to claim 2, wherein the controller (100) is configured to further execute:
in a case where the second display device (30) accepts a luminance adjustment command of the second display unit (31), adjusting only luminance of the second display unit (31) without adjusting luminance of the first display unit (21, 22, 23, 24, 25) of the first display device (20).

4. The in-vehicle system according to claim 2, wherein
in a case where the first display device (20) accepts the luminance adjustment command of the first display unit (21, 22, 23, 24, 25) during predetermined hours, the controller (100) also adjusts the luminance of the second display unit (31) of the second display device (30) in coordination with the luminance adjustment of the first display unit (21, 22, 23, 24, 25), and
in a case where the first display device (20) accepts the luminance adjustment command of the first display unit (21, 22, 23, 24, 25) during hours other than the predetermined hours, the controller (100) does not execute adjustment of the luminance of the second display unit (31) of the second display device (30) in coordination with the luminance adjustment of the first display unit (21, 22, 23, 24, 25).

5. The in-vehicle system according to claim 4, wherein the predetermined hours are hours set as hours during which a headlight of a vehicle is automatically turned on.

6. The in-vehicle system according to claim 2, wherein in a case where the luminance of the second display unit (31) of the second display device (30) is also adjusted in coordination with the luminance adjustment of the first display unit (21, 22, 23, 24, 25) of the first display device (20), the controller (100) adjusts the luminance of the second display unit (31) in the same adjustment direction, at the same timing, and at the same rate as an adjustment direction, a timing, and a rate of the luminance adjustment of the first display unit (21, 22, 23, 24, 25).

7. The in-vehicle system according to claim 2, wherein
each of the first display unit (21, 22, 23, 24, 25) and the second display unit (31) includes a touch panel (27, 32),
the first display device (20) accepts the luminance adjustment command of the first display unit (21, 22, 23, 24, 25) via the touch panel (27) of the first display unit (21, 22, 23, 24, 25), and
the second display device (30) accepts a luminance adjustment command of the second display unit (31) via the touch panel (32) of the second display unit (31).

8. The in-vehicle system according to claim 2, wherein in a case where the first display device (20) accepts a display OFF command of the first display unit (21, 22, 23, 24, 25), the controller (100) is configured to further execute:
also turning OFF display of the second display unit (31) of the second display device (30) in coordination with turning OFF of display of the first display unit (21, 22, 23, 24, 25).

9. The in-vehicle system according to claim 8, wherein in a case where the second display device (30) accepts a display OFF command of the second display unit (31), the controller (100) is configured to further execute:
turning OFF only display of the second display unit (31) without turning OFF display of the first display unit (21, 22, 23, 24, 25) of the first display device (20).

10. The in-vehicle system according to claim 9, wherein
each of the first display unit (21, 22, 23, 24, 25) and the second display unit (31) includes a touch panel (27, 32),
the first display device (20) accepts the display OFF command of the first display unit (21, 22, 23, 24, 25) via the touch panel (27) of the first display unit (21, 22, 23, 24, 25), and
the second display device (30) accepts the display OFF command of the second display unit (31) via the touch panel (32) of the second display unit (31).

11. The in-vehicle system according to claim 2, wherein the first display unit (21, 22, 23, 24, 25) includes a pair of displays protruding towards the rear of a vehicle than an instrument portion disposed in front of a steering wheel, the pair of displays being arranged at positions on both sides of the steering wheel and including touch panels (27).

12. The in-vehicle system according to claim 2, wherein the second display unit (31) includes a display arranged at an intermediate position between the driver's seat and the passenger's seat in the front portion of the vehicle interior, the display including a touch panel (32).

13. An information processing apparatus (10) that controls a first display device (20) including a first display unit (21, 22, 23, 24, 25) provided in front of a driver's seat in a vehicle interior, and a second display device (30) including a second display unit (31) provided closer to a passenger's seat than the first display unit (21, 22, 23, 24, 25) in a front portion of the vehicle interior,
the information processing apparatus (10) comprising a controller (100) configured to execute:
in a case where the first display device (20) accepts a luminance adjustment command of the first display unit (21, 22, 23, 24, 25), also adjusting luminance of the second display unit (31) of the second display device (30) in coordination with luminance adjustment of the first display unit (21, 22, 23, 24, 25).

14. The information processing apparatus (10) according to claim 13, wherein the controller (100) is configured to further execute:
in a case where the second display device (30) accepts a luminance adjustment command of the second display unit (31), adjusting only the luminance of the second display unit (31) without adjusting luminance of the first display unit (21, 22, 23, 24, 25) of the first display device (20).

15. The information processing apparatus (10) according to claim 13, wherein in a case where the luminance of the second display unit (31) of the second display device (30) is also adjusted in coordination with the luminance adjustment of the first display unit (21, 22, 23, 24, 25) of the first display device (20), the controller (100) adjusts the luminance of the second display unit (31) in the same adjustment direction, at the same timing, and at the same rate as an adjustment direction, a timing, and a rate of the luminance adjustment of the first display unit (21, 22, 23, 24, 25).
